# EUROPEAN PATENT APPLICATION

(11) **EP 3 958 624 A1**
(43) Date of publication of application: **23.02.2022**
(21) Application number: 19924889.9
(22) Date of filing: 18.04.2019
(51) Int. Cl.: H04W 64/00, H04W 72/04

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); YOSHIOKA, Shohei, Tokyo 100-6150 (JP); MURAYAMA, Daisuke, Tokyo 100-6150 (JP); NAGATA, Satoshi, Tokyo 100-6150 (JP)
(74) Representative: Hoffmann Eitle
(86) International application number: PCT/JP2019/016640
(87) International publication number: WO 2020/213126

(57) **Abstract**

User equipment according to one aspect of the present disclosure includes: a receiving section configured to receive a given signal transmitted from another user equipment by using a given resource; and a control section configured to estimate at least one of a position of the other user equipment and a distance to the other user equipment based on received power of the given signal in the given resource. Thus, communication based on at least one of a distance and a positional relation between a plurality of nodes can be appropriately controlled.

## Description

### Technical Field

The present disclosure relates to user equipment and a radio communication method in a next-generation mobile communication system.

### Background Art

In a universal mobile telecommunications system (UMTS) network, specifications of long term evolution (LTE) have been drafted for the purpose of further increasing a data rate, providing low latency, and the like (see Non Patent Literature 1). Further, the specifications of LTE-Advanced (third generation partnership project (3GPP) Release. (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (hereinafter, also referred to as NR), a plurality of communications having different ranges is assumed, such as communication in a first range (for example, about 1 meter) between a plurality of communication devices (for example, a smartphone and a wearable terminal) held by a user, communication in a second range (for example, about several meters to several tens of meters) wider than the first range such as vehicle-to-everything (V2X), and communication in a third range (for example, about several tens of meters to several hundreds of meters) wider than the second range such as integrated access backhaul (IAB).

Further, in multi user-multiple-input and multiple-output (MU-MIMO) of NR, it is assumed that multiplexing of a plurality of pieces of UE in a space domain is controlled on the basis of a distance and a positional relation between pieces of user equipment (UE).

As described above, in NR, it is desired to control communication on the basis of at least one of a distance (path-loss) and a positional relation between a plurality of nodes. Here, the node may be any communication device, for example, user equipment (UE), an integrated access backhaul (IAB) node, an intermediate station, a relay station, a base station, a communication device mounted on a moving object, a wearable terminal, an access node, or the like.

Therefore, an object of the present disclosure is to provide user equipment and a radio communication method capable of appropriately controlling communication based on at least one of a distance and a positional relation between a plurality of nodes.

### Solution to Problem

User equipment according to one aspect of the present disclosure includes: a receiving section configured to receive a given signal transmitted from another user equipment by using a given resource; and a control section configured to estimate at least one of a position of the other user equipment and a distance to the other user equipment based on received power of the given signal in the given resource.

### Advantageous Effects of Invention

According to one aspect of the present disclosure, communication based on at least one of a distance and a positional relation between a plurality of nodes can be appropriately controlled.

### Brief Description of Drawings

Figs. 1A and 1B are diagrams illustrating an example of MU-MIMO using diagonalization precoding.
Fig. 2 is a diagram illustrating an example of a node operating as a local manager.
Figs. 3A to 3C are diagrams illustrating an example of an estimation signal according to a first aspect.
Fig. 4 is a diagram illustrating an example of transmission power of an estimation signal according to a third aspect.
Fig. 5 is a diagram illustrating an example of received power of an estimation signal resource according to a fourth aspect.
Figs. 6A to 6C are diagrams illustrating an example of a configuration of an estimation signal resource according to a fifth aspect.
Figs. 7A to 7C are diagrams illustrating an example of determination of an estimation signal resource according to the fifth aspect.
Figs. 8A to 8F are diagrams illustrating an example of an estimation signal resource according to the fifth aspect.
Fig. 9 is a diagram illustrating an example of a schematic configuration of a radio communication system according to one embodiment.
Fig. 10 is a diagram illustrating an example of a configuration of a base station according to one embodiment.
Fig. 11 is a diagram illustrating an example of a configuration of user equipment according to one embodiment.
Fig. 12 is a diagram illustrating an example of a hardware configuration of a base station and user equipment according to one embodiment.

### Description of Embodiments

In NR, it is assumed that a high frequency band such as a microwave (super high frequency (SFH) band, 3 GHz to 30 GHz) is used. Therefore, for example, it has been studied to compensate for radio wave propagation attenuation (path-loss) in a high frequency band by performing beam forming (BF) using an antenna (massive antenna) having several hundred elements.

BF can be classified into digital BF and analog BF. Analog BF is a method using a phase shift on a radio frequency (RF). On the other hand, digital BF is a method of applying precoding onto a baseband (digital signal), and can transmit a plurality of beams in parallel (simultaneously). In digital BF, interference between beams can be reduced by controlling the precoding weight.

Analog BF and digital BF are referred to as analog precoding and digital precoding, respectively. The combination of analog BF and digital BF is also referred to as multi-beam multiplexing, hybrid BF, hybrid configuration, and so on.

In the multi-beam multiplexing, it is assumed that a plurality of pieces of user equipment (UE) is multiplexed for a plurality of beams transmitted in parallel (multi user-multiple-input and multiple-output (MU-MIMO)). The plurality of beams are generated using, for example, diagonalization precoding.

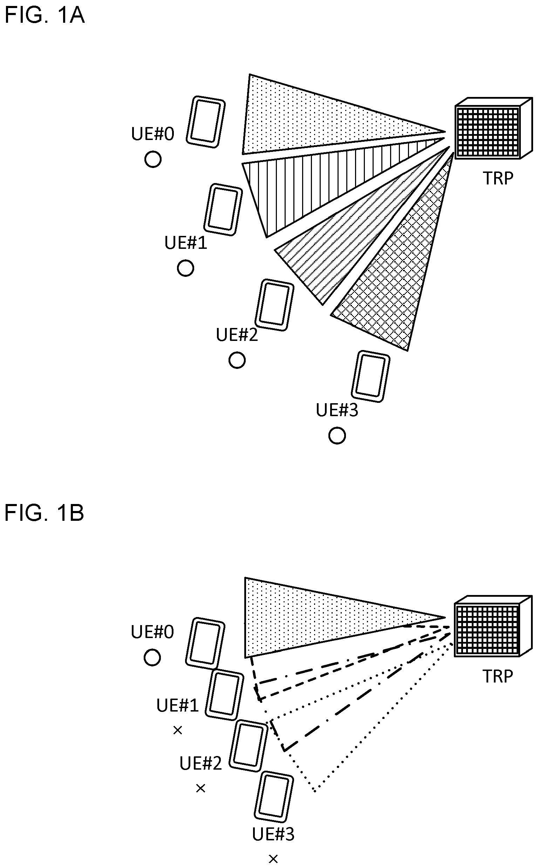

Figs. 1A and 1B are diagrams illustrating an example of MU-MIMO using diagonalization precoding. As illustrated in Fig. 1A, in a case where a base station and a plurality of pieces of UE that transmit or receive signals are relatively discrete, even when the plurality of pieces of UE are multiplexed for the plurality of beams transmitted in parallel, the influence of interference between the plurality of pieces of UE is relatively small.

On the other hand, as illustrated in Fig. 1B, in a case where a base station and a plurality of pieces of UE that transmit or receive signals are closer than those in Fig. 1A, when the plurality of pieces of UE are multiplexed for the plurality of beams transmitted in parallel, there is a possibility that a gain by MU-MIMO cannot be appropriately obtained due to interference between the plurality of pieces of UE. For example, in Fig. 1B, the transmission power of the signals for UE #1, UE #2, and UE #3 is reduced as compared with that in Fig. 1A in order to reduce interference with the signals for UE #0. As a result, there is a possibility that signals for UE #1, UE #2, and UE #3 cannot maintain a sufficient communication speed.

Furthermore, in NR, a plurality of communications having different ranges (also referred to as a communication area, a local area, or the like) is assumed. For example, in NR, terminal-to-terminal communication (for example, it is also referred to as vehicle-to-everything (V2X), NR V2X, device to device (D2D), or the like) or terminal-to-network communication (for example, integrated access backhaul (IAB)) described below is assumed.
- Communication within the first range (for example, about 1 meter) between a plurality of communication devices (for example, a smartphone and a wearable terminal) held by a user
- Communication in the second range (for example, about several meters to several tens of meters) wider than the first range (for example, V2X)
- Communications in the third range (for example, about several tens of meters to several hundreds of meters) wider than the second range (for example, IAB)

A specific node within each range (for example, specific UE, access node, or the like) may operate as a local manager managing another node. The specific node may communicate with the base station, and another node may obtain the control information from the specific node. Alternatively, each node may autonomously operate without a local manager provided within each range.

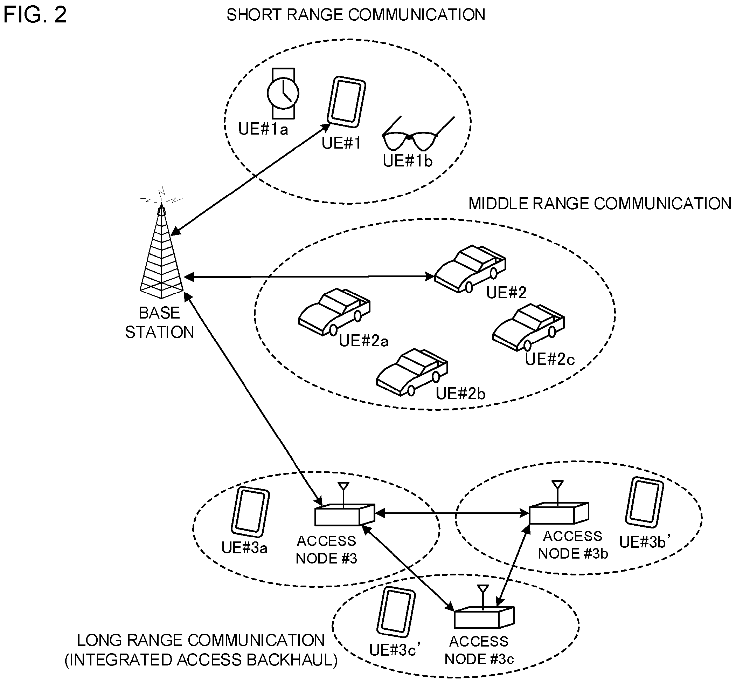

Fig. 2 is a diagram illustrating an example of a node operating as a local manager. As illustrated in Fig. 2, in a case where communication in the first range (short range communication), communication in the second range (middle range communication), and communication in the third range (long range communication) are performed, it is assumed that UE #1 and UE #2 and access node #3 in the first to third ranges each operate as a local manager, but it is not limited thereto. In the first to third ranges, each node may operate autonomously without a local manager being provided.

As illustrated in Fig. 2, UE #1 may perform communication (short range communication) with other pieces of UE (here, UE #1a and UE #1b) within a relatively short range (for example, a diameter of 1 meter). UE #1 may be, for example, a communication device such as a smartphone, and UE #1a and UE #1b may be, for example, a communication device such as a wearable terminal.

UE #2 may perform communication (middle range communication) with other pieces of UE (here, UE #2a to UE #2c) within a range (for example, a diameter of several tens of meters) wider than that of UE #1. Each of UE #2 and UE #2a to UE #2c may be mounted on a moving object such as an automobile, for example.

Further, as illustrated in Fig. 2, the base station may communicate with one or a plurality of access nodes (also referred to as an integrated backhaul, a wireless backhaul, or the like). The access node communicating with the base station may form a given range (for example, a network of long range communication (integrated access backhaul) having a diameter of several hundred meters to several kilometers, or the like). Another access node may be connected to the access node.

For example, in Fig. 2, the base station communicates with access node #3. Access node #3 may communicate with other access nodes (here, access nodes #3b and #3c). Each access node may communicate with the UE in a cell it forms. For example, here, access nodes #3, #3b and 3c may communicate with UE #3a, UE #3b' and UE #3c', respectively.

The access node may be, for example, UE, or a relay station or an intermediate station such as an integrated access backhaul (IAB) node. Communication using a radio link (also referred to as a backhaul link or the like) may be performed between the access node and the base station. Communication using a radio link may also be performed between access nodes. Communication using a radio link (also referred to as an access link or the like) may be performed between each access node and UE.

For example, in Fig. 2, access node #3 that communicates with a base station may be referred to as an IAB donor, a parent IAB node, a parent node, an upper node, a local manager, and the like. On the other hand, access nodes #3b and #3c that communicate with access node #3 may be referred to as a child IAB node, a child node, a lower node, and the like.

As described above, in NR, it is desired to control communication on the basis of at least one of a distance (path-loss) and a positional relation between a plurality of nodes. Here, the node may be any communication device, for example, user equipment (UE), an integrated access backhaul (IAB) node, an intermediate station, a relay station, a base station, a communication device mounted on a moving object, a wearable terminal, an access node, or the like.

Therefore, the present inventors have conceived of appropriately controlling the communication on the basis of at least one of a distance and a positional relation between a plurality of nodes by transmitting a signal used for estimation of at least one of a position of a given node and a distance (path-loss) to the given node from the given node (for example, UE).

Hereinafter, embodiments according to the present disclosure will be described in detail with reference to the drawings. The aspects may be applied independently or at least two aspects may be applied in combination.

In the present disclosure, a node that operates as a local manager may be provided within a plurality of nodes that perform communication in a given range, or each of the plurality of nodes may operate autonomously without a local manager being provided. Each of the plurality of nodes may communicate with the base station, or only a specific node (for example, a local manager) may communicate with the base station.

Furthermore, in the present disclosure, the distance between the plurality of nodes is not limited to a physical distance, and may be paraphrased as information (for example, path-loss or the like) from which the distance can be estimated. Further, in the present disclosure, the power and the power density may be paraphrased with each other. Further, in the present disclosure, the index, the ID, and the number may be paraphrased with each other.

Further, a case where the node that transmits the estimation signal is the UE and the node that receives the estimation signal is the UE or the base station will be exemplified below, but it is not limited thereto. The node that transmits or receives the estimation signal may be any communication device such as UE, an IAB node, an intermediate station, a relay station, a base station, a communication device mounted on a moving object, a wearable terminal, or an access node.

### (First Aspect)

In the first aspect, transmission of a given signal (estimation signal) used for estimation of at least one of the position of the UE and the distance to the UE will be described.

The UE may transmit the estimation signal using at least one (channel/signal) of a given channel and a given signal (given channel/signal may be transmitted as the estimation signal). The given channel/signal may be at least one of channels/signals defined up to Rel. 15 of LTE or NR, or may be generated (configured) on the basis of at least one of channels/signals defined up to the Rel. 15. Alternatively, the given channel/signal may be newly defined.

Specifically, (given channel/signal as) the estimation signal may be based on an uplink (UL) channel/signal (UL channel/signal). It is sufficient if the UL channel/signal is at least one of, for example, a sounding reference signal (SRS), an uplink shared channel (for example, physical uplink shared channel (PUSCH)), an uplink control channel (for example, physical uplink control channel (PUCCH)), a random access channel (for example, physical random access channel (PRACH)).

Further, (given channel/signal as) the estimation signal may be based on a sidelink (SL) channel/signal (SL channel/signal). The SL channel/signal may be, for example, at least one of an SL synchronization signal (at least one of an SL primary synchronization signal (S-PSS) and an SL secondary synchronization signal (S-SSS) can be included), an SL broadcast channel (for example, physical SL broadcast channel (PSBCH)), an SL control channel (for example, physical SL control channel (PSCCH)), an SL shared channel (for example, physical SL shared channel (PSSCH)), and an SL feedback channel (for example, physical SL feedback channel (PSFCH)). A block format or a resource including at least one of the S-PSS, the S-SS, and the PSBCH is also referred to as an SL synchronization signal block.

Furthermore, (given channel/signal as) the estimation signal may be a channel/signal of a physical layer defined exclusively for the estimation signal.

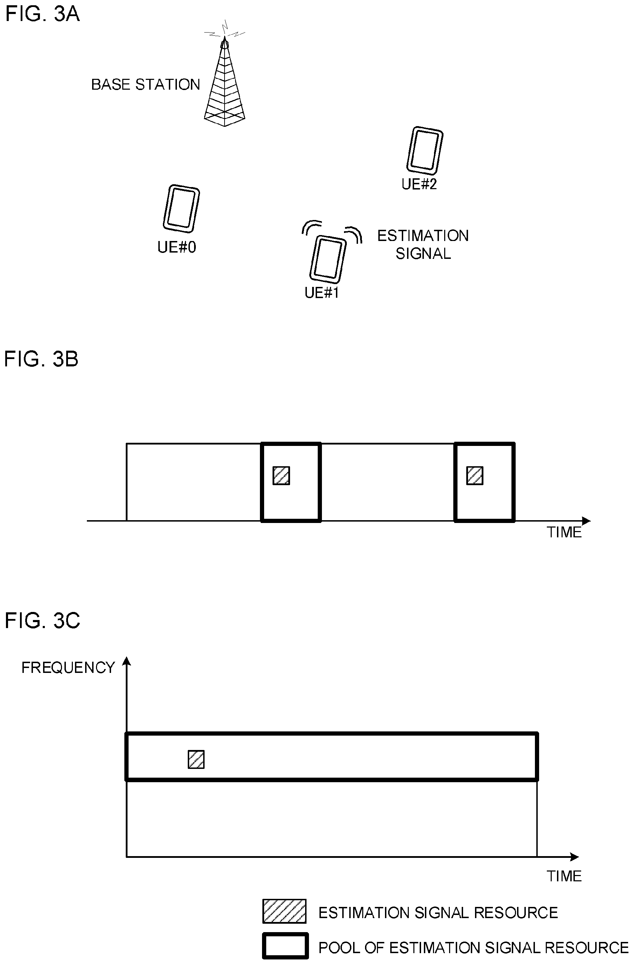

Figs. 3A to 3C are diagrams illustrating examples of the estimation signal according to the first aspect. For example, Fig. 3A illustrates an example of terminal-to-terminal communication of UE #0 to UE #2. Note that UE #0 to UE #2 may communicate with the base station, or some of UE #0 to UE #2 may communicate with the base station, and the some UE may control the other UE.

As illustrated in Fig. 3A, UE #1 (also referred to as first UE, UE on transmission side, or the like) may transmit the estimation signal using a given resource (estimation signal resource). At least one of UE #0 and UE #2 (also referred to as second UE, UE on reception side, or the like) and the base station may estimate the position of UE #1 and the distance (path-loss) to UE #1 based on the received power of the estimation signal.

Note that, in Fig. 3A, at least one of UE #0 and UE #2 and the base station (also referred to as a network) may be assumed to know (recognize) the estimation signal resource used for transmission of the estimation signal from UE #1, or may be assumed to not know (not recognize) the estimation signal resource.

In a case where at least one of UE #0 and UE #2 and the base station is assumed to recognize the estimation signal resource, a notification of the information regarding the estimation signal resource may be given from the base station to UE #0 and UE #2, or may be given to the pieces of UE in common (for example, cell-specific) in the base station. Further, UE #0 and UE #2 may recognize the presence of UE #1 by measuring the channel.

In a case where at least one of UE #0 and UE #2 and the base station is assumed to not recognize the estimation signal resource, a notification of the information regarding the estimation signal resource may not be given from the base station to UE #0 and UE #2 (or may not be given to the pieces of UE in common in the base station).

Figs. 3B and 3C illustrate an example of a pool for the estimation signal resources. As illustrated in Fig. 3B, the pool (domain, resource pool) for the estimation signal resources may include a given time domain resource (for example, one or more slots or one or more symbols) of a given periodicity.

In Fig. 3B, the estimation signal may be transmitted using the estimation signal resource in the pool. Since the estimation signal from UE #1 is subjected to time division multiplexing (TDM) with another signal/channel (for example, the PUSCH from UE #0 or the like) (transmitted at different timings), it is possible to reduce the influence (for example, interference or the like) of the other signal/channel on the estimation signal.

Alternatively, as illustrated in Fig. 3C, the pool for the estimation signal resources may include a given frequency domain resource (for example, one or more physical resource blocks PRB), bandwidth parts (BWP), or component carriers (CC)).

In Fig. 3C, the estimation signal may be transmitted using the estimation signal resource in the pool. Since the estimation signal from UE #1 is subjected to frequency division multiplexing (TDM) with another signal/channel (for example, the PUSCH from UE #0 or the like) (transmitted at different frequencies), it is possible to reduce the influence (for example, interference or the like) of the other signal/channel on the estimation signal.

Note that, although not illustrated, the pool of the estimation signal resources may be subjected to TDM and FDM with another signal/channel.

In Figs. 3B and 3C, in at least one of UE #0 to UE #2, one or more pools may be configured in the UE in advance by higher layer signaling. Alternatively, one or more pools may be defined by specifications.

Note that, in the present disclosure, it is sufficient if the higher layer signaling is at least one of information (also referred to as broadcast information, a master information block (MIB), or the like) transmitted via a broadcast channel (physical broadcast channel), system information (also referred to as a system information block (SIB) or the like), radio resource control (RRC) signaling (also referred to as an RRC parameter, an RRC information element (IE), or the like), and medium access control (MAC) signaling (also referred to as MAC control element (CE) or the like).

For example, UE #1 may randomly select the estimation signal resource from the pool (for example, Fig. 3B or 3C). Alternatively, UE #1 may determine the estimation signal resource in the pool on the basis of at least one of the higher layer signaling and L1 signaling (for example, downlink control information (DCI)).

In the first aspect, the estimation signal may support at least one of the types (also referred to as a type, a resource type, and the like) described below.
- Periodically transmitted estimation signal (periodic estimation signal)
- Semi-persistently transmitted estimation signal (semi-persistent (semi-persistent estimation signal)
- Aperiodically transmitted estimation signal (aperiodic estimation signal)

The UE may receive information related to the estimation signal (estimation signal information). Transmission of an estimation signal using a given type of estimation signal resource may be configured in the UE according to the estimation signal information. The UE may receive the estimation signal information by higher layer signaling.

The estimation signal information may include, for example, at least one of those described below.
- Information indicating a type (for example, information indicating the periodic estimation signal, the semi-persistent estimation signal, or the aperiodic estimation signal)
- Information regarding the type of estimation signal (at least one of periodic estimation signal information, semi-persistent estimation signal information, and aperiodic estimation signal information, which will be described later)

### <Periodic Estimation Signal>

The UE may receive information related to the periodic estimation signal (periodic estimation signal information). The periodic estimation signal information may include information indicating at least one of a resource (also referred to as a transmission resource, an estimation signal resource, or the like) used for transmission of the periodic estimation signal, a periodicity, and a time offset.

For example, the UE may receive the periodic estimation signal information by higher layer signaling (for example, the RRC parameter).

The transmission resource (estimation signal resource) may include at least one of a time domain resource (for example, a given number of symbols), a frequency domain resource (for example, at least one of a given number of PRBs and a given number of subcarriers), a sequence, a code domain resource (for example, at least one of a cyclic shift (CS) and an orthogonal cover code (OCC)), a comb-shaped subcarrier (Comb), and a space domain resource.

The information (estimation signal resource information) indicating the transmission resource (estimation signal resource) may include at least one of those described below.
- Information regarding a time domain resource (for example, information indicating at least one of the number of symbols and a starting position of a symbol)
- Information regarding a frequency domain resource (for example, at least one of information indicating a bandwidth or the number of PRBs, information indicating a starting position of a PRB, and information indicating a subcarrier)
- Information regarding a sequence (for example, a sequence index or the like)
- Information regarding a code domain resource (for example, CS index, OCC number, and the like)
- Information regarding a subcarrier (for example, Comb index)
- Information regarding a space domain resource

The UE may transmit the periodic estimation signal using the estimation signal resource determined based on the estimation signal resource information at a timing (time unit (for example, a slot or symbol)) determined based on the information indicating at least one of the periodicity and the offset.

### <Semi-Persistent Estimation Signal>

The UE may receive information related to the semi-persistent estimation signal (semi-persistent estimation signal information). The semi-persistent estimation signal information may include information indicating at least one of a resource (also referred to as a transmission resource, an estimation signal resource, or the like) used for transmission of the semi-persistent estimation signal, a periodicity, and a time offset.

For example, the UE may receive the semi-persistent estimation signal information by at least one of higher layer signaling (for example, the RRC parameter), MAC signaling (for example, the MAC CE), and L1 signaling (for example, DCI).

The transmission resource of the semi-persistent estimation signal and the estimation signal resource information indicating the transmission resource may be similar to those described regarding the periodic estimation signal.

At least one of the periodicity, the offset, and the transmission resource of the semi-persistent estimation signal may be configured in the UE on the basis of the semi-persistent estimation signal information.

Further, activation or deactivation (release) of the semi-persistent estimation signal may be instructed to the UE by a given signal. The given signal may be, for example, MAC signaling (for example, the MAC CE) or L1 signaling (for example, DCI).

When detecting a signal that instructs activation, until detecting a signal that instructs deactivation (release), the UE may transmit the semi-persistent estimation signal using the transmission resource determined based on the information indicating the transmission resource at a timing (time unit (for example, a slot or symbol)) determined based on the information indicating at least one of the periodicity and the offset.

### <Aperiodic Estimation Signal>

The UE may receive information related to the aperiodic estimation signal (aperiodic estimation signal information). The aperiodic estimation signal information may include information indicating a resource (also referred to as a transmission resource, an estimation signal resource, or the like) used for transmission of the aperiodic estimation signal.

For example, the UE may receive the aperiodic estimation signal information by at least one of higher layer signaling (for example, the RRC parameter), MAC signaling (for example, the MAC CE), and L1 signaling (for example, DCI).

The transmission resource of the aperiodic estimation signal and the estimation signal resource information indicating the transmission resource may be similar to those described regarding the periodic estimation signal.

The transmission resource of the aperiodic estimation signal may be configured in the UE on the basis of the aperiodic estimation signal information. Transmission of the aperiodic estimation signal may be triggered by a given signal. The given signal may be, for example, L1 signaling (for example, DCI).

The UE may transmit the aperiodic estimation signal using the transmission resource determined based on the information indicating the transmission resource based on a trigger signal (for example, DCI). Note that at least part of the information indicating the transmission resource of the aperiodic estimation signal may be designated by the trigger signal or may be overridden.

In the first aspect, the UE can appropriately transmit the estimation signal used for estimating at least one of the position of the UE and the distance to the UE.

### (Second Aspect)

In the second aspect, generation of the estimation signal will be described.

The estimation signal may be generated on the basis of a given sequence. The given sequence may be, for example, any of a constant amplitude zero auto correlation (CAZAC) sequence, a sequence according to a CAZAC sequence, a Zadoff-Chu (ZC) sequence, an M sequence, a pseudo-noise (PN) sequence, a pseudo-random sequence, a Gold sequence, a noise sequence, or a given sequence (for example, computer generated sequence (CGS) sequence) defined by specifications. Further, the given sequence may be an orthogonal sequence or a quasi-orthogonal sequence.

A notification of information (for example, at least one of a sequence index, a CS index, and a Comb index) used to generate the estimation signal may be given to the UE by at least one of higher layer signaling and L1 signaling (for example, DCI). Note that the information may be included in the estimation signal resource information.

Alternatively, the UE may derive information (for example, at least one of a sequence index, a CS index, and a Comb index) used to generate the estimation signal. For example, the UE may derive the information based on at least one of a radio network temporary identifier (RNTI), an index of the UE, an index of a slot, an index of a symbol, and an index of frequency hopping. The UE may generate the estimation signal based on the derived information and the given hopping rule.

In the second aspect, the UE can appropriately generate the estimation signal.

### (Third Aspect)

In the third aspect, transmission power of the estimation signal will be described.

The UE may transmit the estimation signal with a transmission power different from that of another channel/signal (for example, PUSCH, PUCCH, SRS, or the like). Specifically, the UE may transmit the estimation signal with power smaller than that for the other channel/signal. For example, the UE that transmits or receives an estimation reference signal configured based on the SRS (first SRS) may assume that the transmission power of the first SRS is smaller than the that of an SRS (first SRS) for channel estimation (measurement) of the PUSCH, the PUCCH, or the UL.

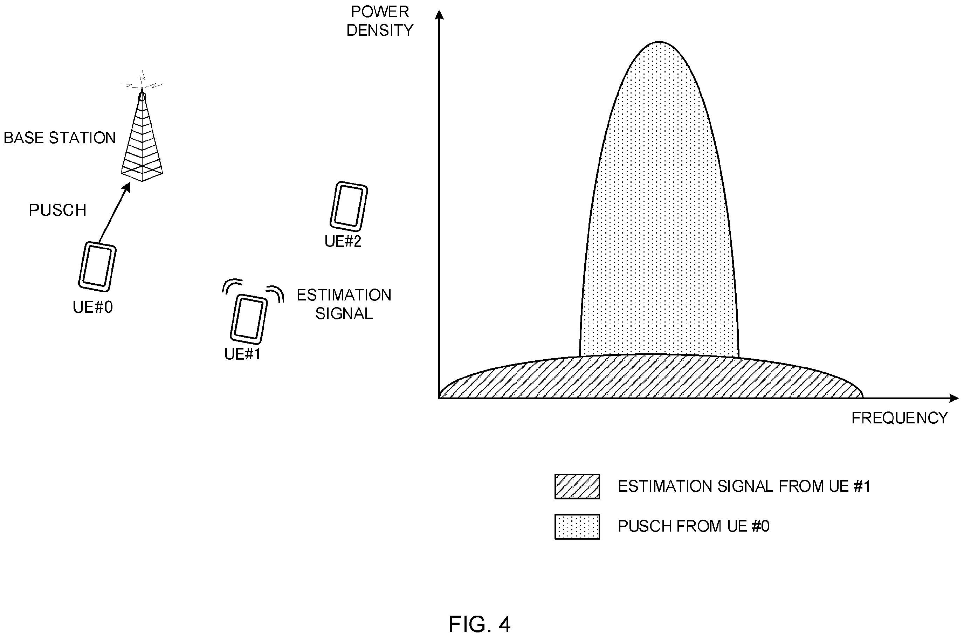

Fig. 4 is a diagram illustrating an example of transmission power of an estimation signal according to the third aspect. As illustrated in Fig. 4, the power density of the estimation signal may be controlled to be smaller than the power density of the PUSCH.

For example, as illustrated in Fig. 4, when UE #1 transmits the estimation signal using the same resource as another channel/signal (for example, the PUSCH from UE #0), when the transmission power of the estimation signal is smaller than that of the PUSCH, the reception side (for example, a base station (network)) can distinguish the estimation signal from the PUSCH.

Specifically, in Fig. 4, since the base station (network), UE #0, or UE #2 receives the estimation signal from UE #1 as noise, even when another channel/signal is transmitted using the same resource as that of the estimation signal, characteristic deterioration of the other channel/signal can be reduced.

Here, the transmission power or the power density of the estimation signal may be given by a given value or may be derived by the UE.

The given value may be defined in advance by specifications, or may be designated by at least one of higher layer signaling and L1 signaling (for example, DCI).

The UE may assume that the given value is common to pieces of UE in the cell (cell-specific). This is because peripheral UE needs to know the value of the transmission power (or the transmission density) of the UE in order to estimate the distance between the pieces of UE on the basis of the estimation signal.

Alternatively, the UE may derive the transmission power or the transmission density of the estimation signal based on the transmission power or the transmission density of another channel/signal (for example, PUSCH, PUCCH, or SRS). For example, the UE may derive the transmission power or the transmission density of the estimation signal based on the transmission power or the transmission density of the other channel/signal and a given offset.

The given offset may be defined in advance by specifications, or may be configured in the UE by higher layer signaling.

Alternatively, the UE may derive (determine) the transmission power or the transmission density of the estimation signal on the basis of at least one of parameters described below.
- Maximum transmission power configured in the UE
- Parameters related to target received power (a parameter related to a transmission power offset, transmission power offset P0, a target received power parameter, or the like)
- Bandwidth (number of PRBs) assigned to an estimation signal
- Path-loss
- A value (also referred to as α, msg3-Alpha, p0-PUSCH-Alpha, fractional factors, or the like) provided by a higher layer parameter
- Transmission power control (TPC) command
- Accumulation value of TPC command
- Transmission power adjustment component (offset, transmission format compensation, Δ_{TF})

Note that the transmission power offset P0 may be configured in the UE for the estimation signal separately from the transmission power offset P0 of another channel/signal (for example, PUSCH, PUCCH, or SRS), or may be common to the other channel/signal. Further, α may be configured in the UE for the estimation signal separately from α of another channel/signal, or may be common to the other channel/signal.

Further, the UE may determine the transmission power or the transmission density of the estimation signal based on the TPC command or not based on the TPC command. The value of the transmission power or the transmission density based on the TPC command may be referred to as a closed loop (CL)-power control (PC) value. The value of the transmission power or transmission density determined not based on the TPC command may be referred to as an open loop (OL)-PC value.

A notification of the TPC command may be given to the UE for the estimation signal separately from α of another channel/signal or the TPC command may be common to the other channel/signal. The TPC command may be included in the DCI (for example, DCI format 0_0, 0_1, or 2_3, or other DCI formats).

Note that, by using the OL-PC value, interference to the other channel/signal (for example, PUSCH, PDSCH, or the like) by excessive transmission power can be reduced. As described above, it is sufficient if the transmission power of the estimation reference signal is semi-statically controlled by the OL-PC, and it may not be dynamically controlled by the CL-PC.

In the third aspect, since the UE can appropriately control the transmission power of the estimation signal, characteristic deterioration of another channel/signal (for example, the PUSCH) due to the estimation signal can be prevented. In particular, even when the estimation signal and the other channel/signal are transmitted using a resource in which at least a part of the estimation signal and the other channel/signal overlap with each other, it is effective for preventing characteristic deterioration of the other channel/signal.

Note that, as illustrated in Fig. 4, in a case where the estimation signal from UE #1 collides with another channel/signal (for example, the PUSCH or PUCCH from UE #0) (a case where a resource that at least partially overlaps the estimation signal and the other channel/signal is assigned), UE #1 may prioritize the estimation signal over the other channel/signal, or may drop the estimation signal (stop transmitting the estimation signal).

For example, UE #1 may transmit a measurement signal in preference to transmission of the other channel/signal from UE #0. In this case, the estimation accuracy of at least one of the position of UE #1 and the distance to UE #1 can be improved. As a result, the throughput of the entire system can be improved.

Alternatively, UE #1 may drop the measurement signal, and transmission of the other channel/signal from UE #0 may be prioritized. In this case, deterioration of the throughput of UE #0 can be prevented, and occurrence of a delay due to the stop of transmission of HARQ-ACK from UE #0 can be prevented.

### (Fourth Aspect)

In the fourth aspect, estimation of the distance (path-loss) between pieces of UE using an estimation signal will be described. The UE or the base station that has received the estimation signal may estimate the distance (path-loss) based on the received power (for example, reference signal received power (RSRP)) of the estimation signal.

Specifically, the UE (for example, UE #0 or UE #2 in Fig. 3A) or the base station may estimate the distance (path-loss) to the UE (for example, UE #1 in Fig. 3A) that transmits the estimation signal on the basis of the received power (or the power density) of the estimation signal transmitted by the transmission resource satisfying a given condition among one or more transmission resource candidates (also referred to as candidate resources or the like).

The transmission resource satisfying the given condition may be a transmission resource in which the received power of the estimation signal is equal to or less than (or less than) a given threshold value (for example, mdB). The given threshold value may be defined in advance by specifications. Alternatively, a notification of information indicating the given threshold value may be given to the UE by higher layer signaling.

The UE may exclude a transmission resource (for example, a transmission resource in which the received power of the estimation signal is larger than or equal to or larger than a given threshold value) that does not satisfy the given condition from the estimation of the distance. In the transmission resource, it is assumed that another UE transmits another UL channel/signal (for example, the PUSCH). By excluding the transmission resource from the estimation of the distance, the estimation accuracy of the distance can be improved.

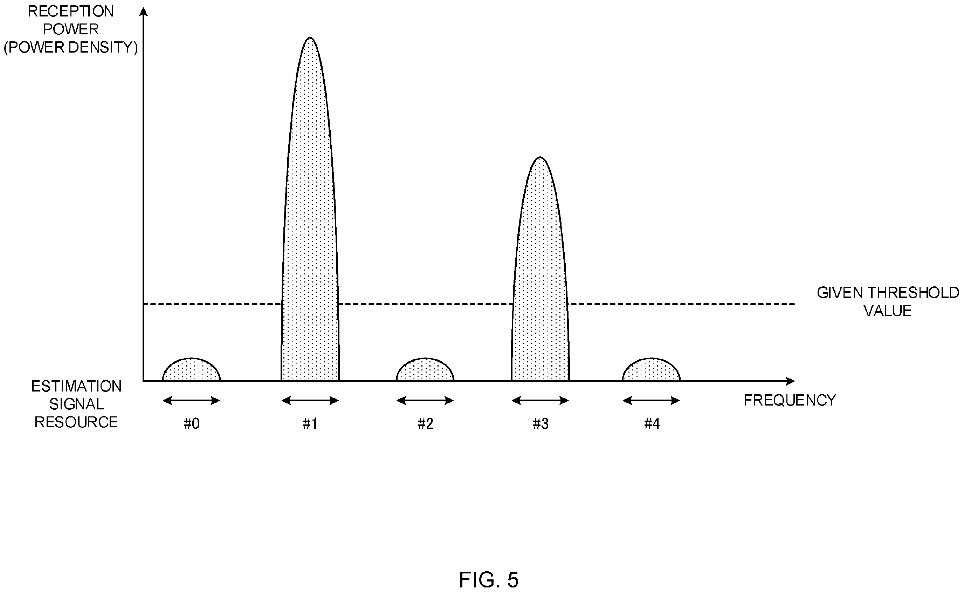

Fig. 5 is a diagram illustrating an example of received power of an estimation signal resource according to the fourth aspect. In Fig. 5, each UE in the base station may receive information indicating each estimation signal resource (here, each of estimation signal resources #0 to #6).

The UE (for example, UE #0 or UE #2 in Fig. 3A) or the base station may receive an estimation signal by using each estimation signal resource and measure received power of the estimation signal. In this manner, the estimation signal may be transmitted from given UE (for example, UE #1 in Fig. 3A) by using one or more estimation signal resources.

For example, in Fig. 5, among the estimation signal resources #0 to #4, the received power in the estimation signal resources #1 and #3 is larger than the given threshold value. Therefore, the UE (for example, UE #0 or UE #2 in Fig. 3A) or the base station may estimate at least one of the position of the UE (for example, UE #1 in Fig. 3A) that transmits the estimation signal resource and the distance (path-loss) to the UE based on the received power in the estimation signal resources #0, #2, and #4 excluding the estimation signal resources #1 and #3.

For example, the UE (for example, UE #0 or UE #2 in Fig. 3A) or the base station may estimate at least one of the position and the distance (path-loss) on the basis of the average value of the received power of the estimation signal resources #0, #2, and #4.

In the fourth aspect, since at least one of the position and the distance (path-loss) is estimated on the basis of the received power of the estimation signal resource satisfying the given condition, the estimation accuracy of at least one of the position and the distance can be improved.

### (Fifth Aspect)

In the fifth aspect, a frame configuration of an estimation signal (configuration of an estimation signal resource) will be described.

The estimation signal may be mapped (also referred to as allocated or assigned) to at least one of consecutive frequency resources and non-consecutive frequency resources in the frequency domain. The frequency resource may be, for example, a PRB, a resource element (RE), or a subcarrier.

Further, the estimation signal may be mapped to one or consecutive symbols in the time domain. Further, frequency hopping may be applied to the estimation signal every given time unit (for example, a slot or symbol).

The frequency hopping pattern (hopping pattern) may be derived by the UE. For example, the UE may derive the hopping pattern based on at least one of an index of a given time unit (for example, a slot or symbol), an index of a cell (cell ID), and a bandwidth (for example, the number of PRBs or the number of REs). Note that the hopping pattern may be explicitly designated by the UE. Further, the hopping pattern is not limited to the frequency hopping pattern, and may include a hopping pattern (information) of an estimation signal resource such as a time domain, an orthogonal code index, a sequence index, a CS index, and a Comb index.

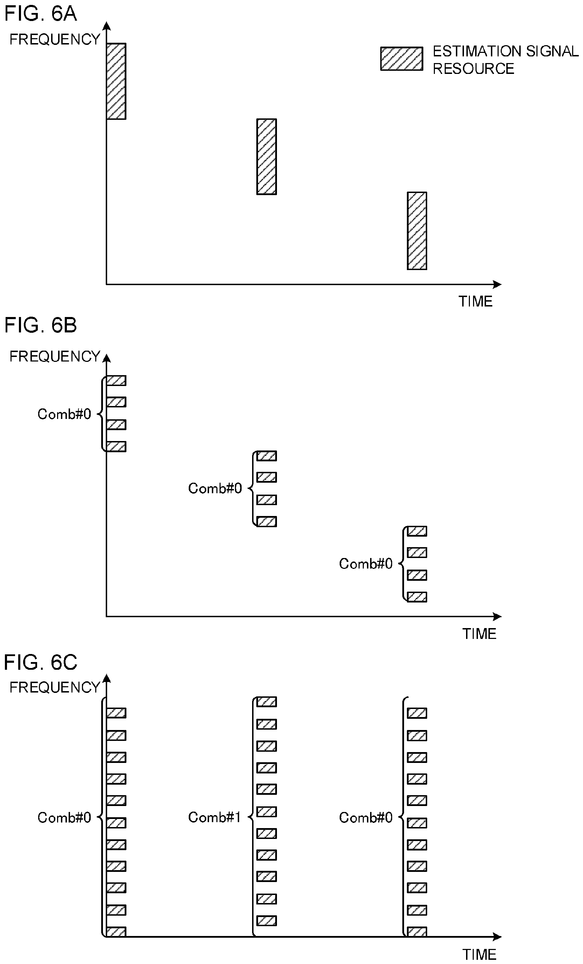

Figs. 6A to 6C are diagrams illustrating an example of a configuration of an estimation signal resource according to the fifth aspect.

As illustrated in Fig. 6A, the estimation signal resource may include consecutive frequency resources (for example, consecutive PRBs, consecutive REs, or consecutive subcarriers) in a given bandwidth. Further, the estimation signal resource may be hopped every given time unit (for example, one or more slots or one or more symbols).

Alternatively, as illustrated in Figs. 6B and 6C, a designation signal resource may include a plurality of non-consecutive frequency resources within a given bandwidth. Each of the plurality of frequency resources may be one PRB or one RE (subcarrier), or a set of a plurality of consecutive PRBs or a plurality of consecutive REs (subcarriers).

The given bandwidth in which the non-consecutive frequency resources are allocated may be, for example, a bandwidth assigned to the UE, a component carrier (also referred to as a serving cell, a carrier, a cell, or the like), a partial band (bandwidth part (BWP)) in the CC, or the like. Note that, in Fig. 6C, the given bandwidth is wider than that in Fig. 6B.

In Figs. 6B and 6C, it is assumed that the plurality of non-consecutive frequency resources in the given bandwidth constituting the estimation signal are a comb-shaped subcarrier (Comb), but it is not limited thereto. By using a Comb for the estimation signal, a peak to average power ratio (PAPR) can be suppressed low even in a case where a sequence (for example, ZC sequence, CGS sequence, CAZAC sequence, or the like) having a low PAPR is transmitted in a wide band.

For example, in Figs. 6B and 6C, a plurality of Combs within a given bandwidth is provided, and each Comb includes a set of subcarriers for each given number of subcarriers (given frequency intervals). As illustrated in Figs. 6B and 6C, when two Combs #0 and #1 are provided in a given bandwidth, each of Combs #0 and #1 may include a set of subcarriers (a set of odd-index subcarriers or a set of even-index subcarriers) for every two subcarriers.

In a case where the estimation signal resource includes a plurality of non-consecutive frequency resources (for example, Comb of a given index), as illustrated in Fig. 6B, a given bandwidth in which the estimation signal resource is allocated may be hopped every given time unit (for example, one or more slots or one or more symbols).

Alternatively, as illustrated in Fig. 6C, a plurality of frequency resources constituting the estimation signal resource may be hopped every given time unit (for example, one or more slots or one or more symbols). For example, in Fig. 6C, the index of Comb hops every given time unit.

The hopping pattern in Figs. 6A to 6C may be derived (generated) based on at least one of an index of a time unit (for example, a slot or symbol) in which the estimation signal resource is allocated, an index of a cell (or a virtual cell), and the given bandwidth (number of PRBs, number of REs, or number of subcarriers).

Here, the hopping pattern may be paraphrased as a frequency offset between hops of specific frequency domain resources constituting the estimation signal. Further, although not illustrated in Figs. 6A to 6C, the hopping pattern is not limited to the frequency hopping pattern, and may include a hopping pattern (information) of an estimation signal resource such as a time domain, an orthogonal code index, a sequence index, a CS index, and a Comb index.

Further, the UE may determine a specific frequency domain resource (or an index of the specific frequency domain resource) constituting the estimation signal on the basis of the hopping pattern. The specific frequency domain resource may be a starting PRB, a starting RE, or a starting subcarrier of a bandwidth assigned to the estimation signal, may be a PRB, an RE, or a subcarrier with a maximum or minimum index of the bandwidth, or may be a PRB, an RE, or a subcarrier at a center (or substantially center) of the bandwidth.

Further, the UE may receive at least one of the information indicating the given bandwidth and the information indicating the number of the plurality of non-consecutive frequency resources (for example, the number of Combs or subcarriers) constituting the estimation signal resource.

The UE may determine the estimation signal resource based on at least one of the index of the specific frequency resource determined based on the hopping pattern, the given bandwidth, and the number of frequency resources used for the estimation signal within the given bandwidth.

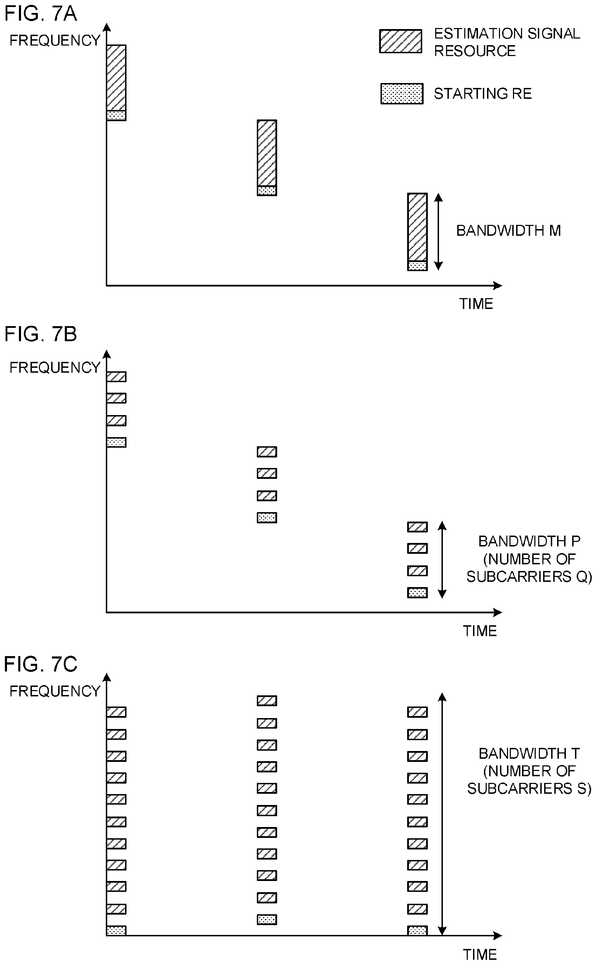

Figs. 7A to 7C are diagrams illustrating an example of determination of an estimation signal resource according to the fifth aspect. Figs. 7A to 7C primarily describe differences from Figs. 6A to 6C. In Figs. 7A to 7C, the UE may determine the specific frequency resource constituting the estimation signal resource and the frequency offset of the specific frequency resource between hops based on at least one of the index of the time unit, the cell index, the bandwidth, and the number of frequency domain resources constituting the estimation signal within the bandwidth.

Each frequency resource constituting the estimation signal resource is assumed to be one RE or one subcarrier, but is not limited thereto, and may be one PRB. Further, the specific frequency resource is assumed to be a starting RE, but is not limited thereto. In the present disclosure, the RE and the subcarrier may be paraphrased with each other. Further, when each frequency resource includes one PRB, the RE or the subcarrier in Figs. 7A to 7C may be read as the PRB.

For example, in Fig. 7A, the UE may determine the estimation signal resource of each hop based on the index of the starting RE (or starting subcarrier) of each hop determined based on the hopping pattern and the given bandwidth M.

Further, in Fig. 7B, the UE may determine the estimation signal resource of each hop based on the index of the starting RE (or starting subcarrier) of each hop determined based on the hopping pattern, the given bandwidth P, and the number Q of REs (subcarriers) used for the estimation signal within the given bandwidth P.

Similarly, in Fig. 7C, the UE may determine the estimation signal resource of each hop based on the index of the starting RE (or starting subcarrier) of each hop determined based on the hopping pattern, the given bandwidth T, and the number S of REs (subcarriers) used for the estimation signal within the given bandwidth T.

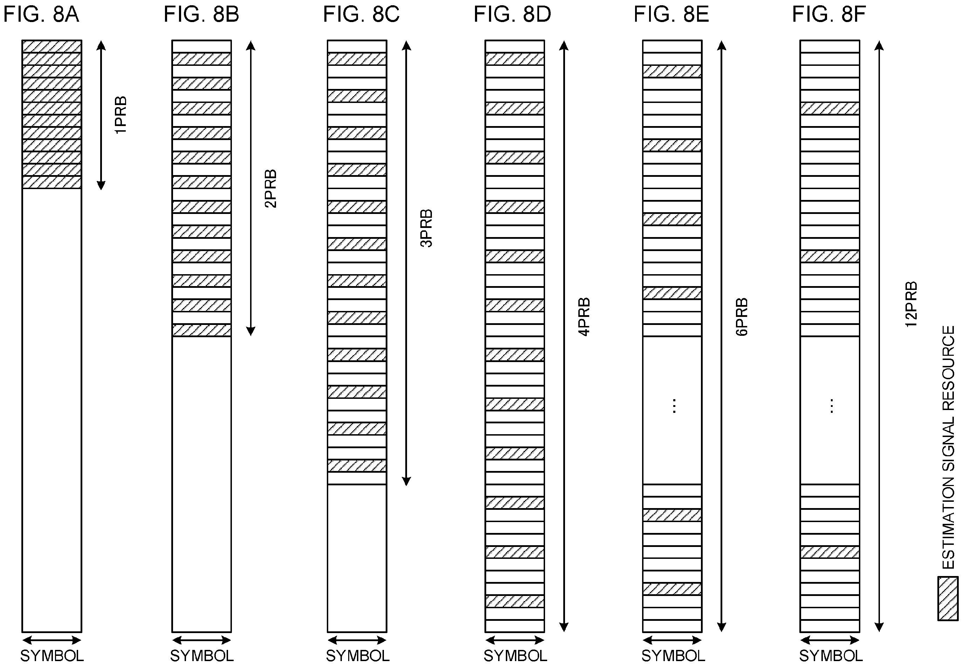

Figs. 8A to 8F are diagrams illustrating an example of an estimation signal resource according to the fifth aspect. As illustrated in Figs. 8A to 8F, in a case where the number of the plurality of frequency domain resources to which the estimation signal is mapped is constant (here, 12), the interval between the plurality of frequency domain resources may be controlled on the basis of a given bandwidth in which the plurality of frequency domain resources is allocated.

Note that, in Figs. 8A to 8F, each of the plurality of frequency resources in the given bandwidth in which the given bandwidth includes one or more PRBs includes one RE, but it is not limited thereto. Further, Figs. 8A to 8F are merely examples, and the number of REs (the number of subcarriers) constituting the estimation signal resource is not limited to 12.

For example, as illustrated in Figs. 8A to 8F, when the given bandwidth includes n (n ≥ 1) PRBs, the estimation signal resource may include 12 subcarriers per n subcarriers (n subcarrier interval).

Alternatively, the given bandwidth in which the plurality of frequency domain resources to which the estimation signal is mapped is allocated may be constant, and the number and interval of the plurality of frequency domain resources may be controlled. For example, when the given bandwidth is n (n ≥ 1) PRBs and the interval between the frequency domain resources constituting the estimation signal resource is y, the number of frequency domain resources (for example, subcarriers) constituting the estimation signal resource may be 12n/y.

For example, when n = 1 PRB and y = 2, the number of the plurality of subcarriers constituting the estimation signal in one PRB may be six. Similarly, when n = 1 PRB and y = 3, the number of the plurality of subcarriers constituting the estimation signal in one PRB may be four. When n = 1 PRB and y = 4, the number of the plurality of subcarriers constituting the estimation signal in one PRB may be three. When n = 1 PRB and y = 6, the number of the plurality of subcarriers constituting the estimation signal in one PRB may be two. When n = 1 PRB and y = 12, the number of the plurality of subcarriers constituting the estimation signal in 1 PRB may be one.

### (Other Aspects)

Although in the first to fifth aspects, the estimation signal is a signal of a given sequence, but it is not limited thereto in other aspects.

The estimation signal may be a signal obtained by modulating a given channel/signal (for example, the PUSCH and a demodulation reference signal (DMRS) of the PUSCH). It is sufficient if at least one of the position of the UE that transmits the estimation signal and the distance to the UE is determined based on the modulated value.

For example, the information (position/distance information) regarding at least one of the position and the distance of the UE may be indicated by the sequence selected for the estimation signal. Specifically, the position/distance information may be associated with each sequence of the estimation signal, and the UE may select a sequence associated with the position/distance information of the UE from a plurality of sequences for the estimation signal, and transmit the estimation signal by using the selected sequence.

Further, the position/distance information of the UE may be indicated by the CS index (or the phase rotation amount) selected for the estimation signal. Specifically, the position/distance information may be associated with each CS index (phase rotation amount) of the estimation signal, and the UE may select a sequence associated with the position/distance information of the UE from a plurality of sequences for the estimation signal, and transmit the estimation signal using the selected sequence.

Alternatively, the UE may transmit the estimation signal (for example, the PUSCH) including the position/distance information. The position/distance information may indicate a relative positional relation between a plurality of nodes, or may indicate an absolute position (for example, a position acquired from a global positioning system (GPS)).

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

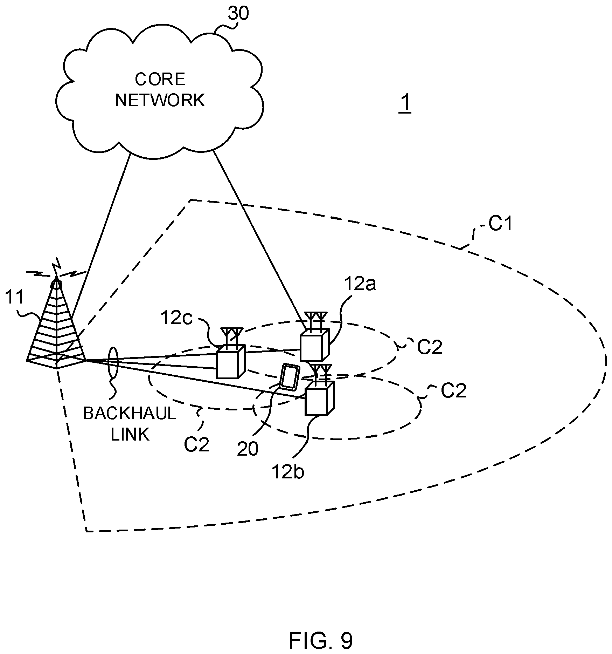

Fig. 9 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)) and dual connectivity between NR and LTE (NR-E-UTRA dual connectivity (NE-DC)).

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. User equipment 20 may be located in at least one cell. The arrangement, number, and the like of cells and the user equipment 20 are not limited to the aspects illustrated in the drawings. Hereinafter, the base stations 11 and 12 will be collectively referred to as base stations 10 unless specified otherwise.

The user equipment 20 may be connected to at least one of the plurality of base stations 10. The user equipment 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and, for example, FR1 may correspond to a frequency range higher than FR2.

Further, the user equipment 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user equipment 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a downlink shared channel (physical downlink shared channel (PDSCH)) shared by each user equipment 20, a broadcast channel (physical broadcast channel (PBCH)), a downlink control channel (physical downlink control channel (PDCCH)), or the like may be used.

Further, in the radio communication system 1, as an uplink channel, an uplink shared channel (physical uplink shared channel (PUSCH)) shared by each user equipment 20, an uplink control channel (physical uplink control channel (PUCCH)), a random access channel (physical random access channel (PRACH)), or the like may be used.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI that schedules the PDSCH may be referred to as DL assignment, DL DCI, or the like, and DCI that schedules the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a certain search space based on search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SS Block (SSB), and the like. Note that the SS, the SSB, or the like may also be referred to as a reference signal.

Further, in the radio communication system 1, a measurement reference signal (sounding reference signal (SRS)), a demodulation reference signal (DMRS), and the like may be transmitted as an uplink reference signal (UL-RS). Note that, DMRS may be referred to as a user equipment-specific reference signal (UE-specific Reference Signal).

### (Base station)

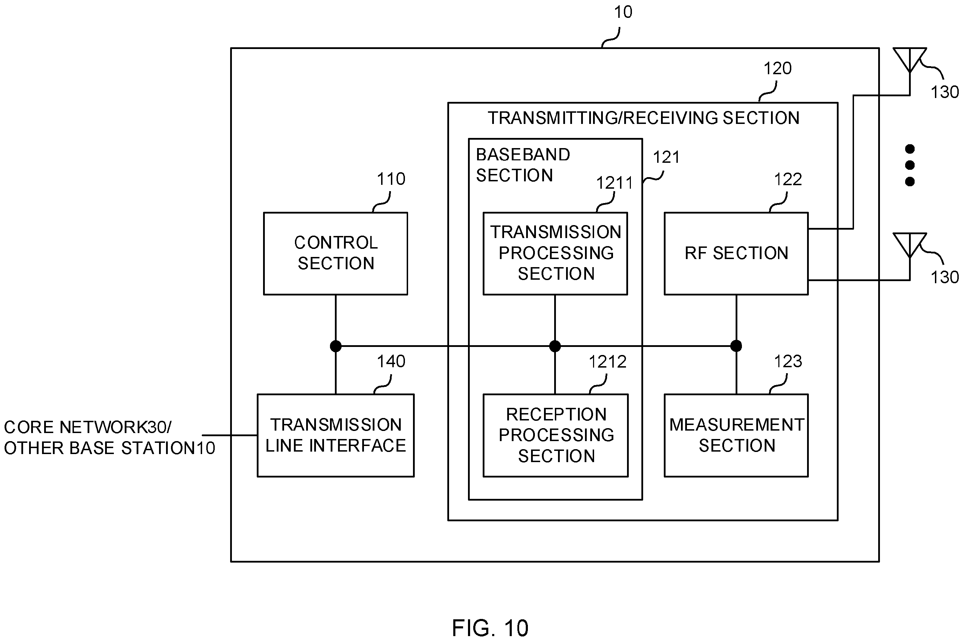

Fig. 10 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, or the like, which is described based on common recognition in the technical field to which the present disclosure relates.

The transmitting/receiving section 120 may be constituted as an integrated transmitting/receiving section, or may be constituted by a transmitting section and a receiving section. The transmitting section may be constituted by the transmission processing section 1211 and the RF section 122. The receiving section may be constituted by the reception processing section 1212, the RF section 122, and the measurement section 123.

The transmission/reception antenna 130 can be constituted by an antenna, which is described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (e.g., reference signal received power (RSRP)), received quality (e.g., reference signal received quality (RSRQ), a signal to interference plus noise ratio (SINR), or a signal to noise ratio (SNR)), signal strength (e.g., received signal strength indicator (RSSI)), propagation path information (e.g., CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user equipment 20.

Note that the transmitting section and the receiving section of the base station 10 in the present disclosure may be constituted by at least one of the transmitting/receiving section 120, the transmission/reception antenna 130, and the transmission line interface 140.

Note that the transmitting/receiving section 120 may receive a given signal (estimation signal) transmitted from the user equipment 20 (for example, UE #1 in Fig. 3A) using a given resource (estimation signal resource).

The control section 110 may estimate at least one of the position of the user equipment 20 and the distance to the user equipment 20 on the basis of the received power of the given signal in the given resource (first aspect).

The control section 110 may assume that the given signal is transmitted with a transmission power smaller than that of at least one of another signal and another channel (third aspect).

In a case where the received power is equal to or less than a given threshold value or less than the given threshold value, the control section 110 may estimate the distance on the basis of the received power (fourth aspect).

The given resource may include one or more consecutive frequency resources or a plurality of nonconsecutive frequency resources in a given bandwidth (fifth aspect).

Further, the transmitting/receiving section 120 may transmit information regarding the given signal (the estimation signal information) from the base station 10 or another user equipment 20 (for example, a local manager). The transmitting/receiving section 120 may transmit the estimation signal information to pieces of UE in common in the cell (cell-specific). The transmitting/receiving section 120 may receive or transmit another signal/channel other than the given signal.

### (User Equipment)

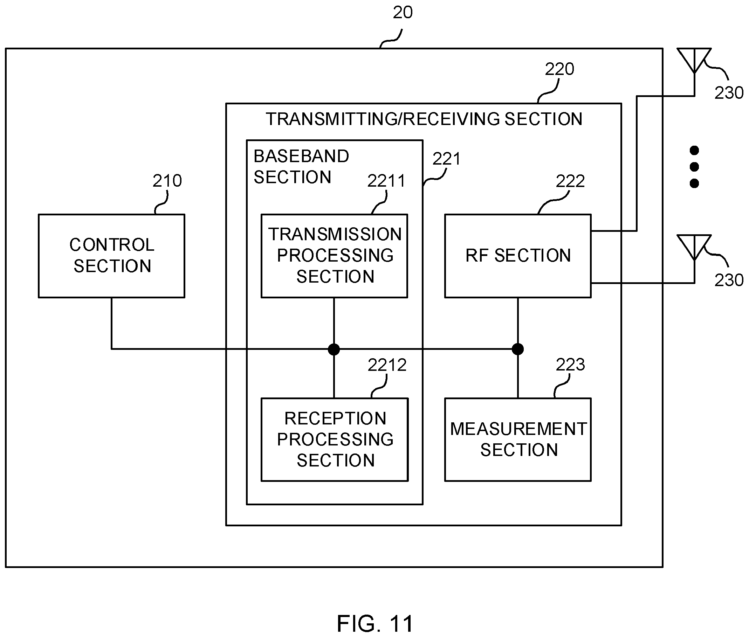

Fig. 11 is a diagram illustrating an example of a configuration of user equipment according to one embodiment. The user equipment 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user equipment 20 includes other functional blocks that are necessary for radio communication as well. A part of processing of each section described below may be omitted.

The control section 210 controls the entire user equipment 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a baseband circuit, a filter, a phase shifter, a measurement circuit, a transmission/reception circuit, or the like, which is described based on common recognition in the technical field to which the present disclosure relates.

The transmitting/receiving section 220 may be constituted as an integrated transmission/receiving section, or may be constituted by a transmitting section and a receiving section. The transmitting section may be constituted by the transmission processing section 2211 and the RF section 222. The receiving section may be constituted by the reception processing section 2212, the RF section 222, and the measurement section 223.

The transmission/reception antenna 230 can be constituted by an antenna, which is described based on common recognition in the technical field to which the present disclosure relates, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data acquired from the control section 210 or control information to generate a bit string to be transmitted.

The transmitting/receiving section 220 (transmission processing section 2211) may perform transmission processing such as channel encoding (which may include error correcting encoding), modulation, mapping, filtering processing, DFT processing (if necessary), IFFT processing, precoding, or digital-analog transform on a bit string to be transmitted, and may output a baseband signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) may not perform DFT processing as the transmission processing.

The transmitting/receiving section 220 (RF section 222) may perform modulation to a radio frequency band, filtering processing, amplification, and the like on the base band signal, and may transmit a signal in the radio frequency band via the transmission/reception antenna 230.

Meanwhile, the transmitting/receiving section 220 (RF section 222) may perform amplification, filtering processing, demodulation to a base band signal, and the like on the signal in the radio frequency band received by the transmission/reception antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired base band signal.

The transmitting/receiving section 220 (measurement section 223) may perform measurement on the received signal. For example, the measurement section 223 may perform RRM measurement, CSI measurement, and the like based on the received signal. The measurement section 223 may measure received power (e.g., RSRP), received quality (e.g., RSRQ, SINR, or SNR), signal strength (e.g., RSSI), propagation path information (e.g., CSI), and the like. The measurement result may be output to the control section 210.

Note that the transmitting section and the receiving section of the user equipment 20 in the present disclosure may include at least one of the transmitting/receiving section 220 and the transmission/reception antenna 230.

Note that the transmitting/receiving section 220 of the user equipment 20 on the reception side (for example, UE #0 or UE #2 in Fig. 3A) may receive a given signal (estimation signal) transmitted from another user equipment 20 (for example, UE #1 in Fig. 3A) by using a given resource (estimation signal resource). The transmitting/receiving section 220 may receive the given signal from the other user equipment 20 without via the base station 10.

The control section 210 of the user equipment 20 on the reception side may estimate at least one of the position of the other user equipment 20 and the distance to the other user equipment 20 on the basis of the received power of the given signal in the given resource.

The control section 210 may assume that the given signal is transmitted with a transmission power smaller than that of at least one of another signal and another channel (third aspect).

In a case where the received power is equal to or less than a given threshold value or less than the given threshold value, the control section 210 may estimate the distance on the basis of the received power (fourth aspect).

The given resource may include one or more consecutive frequency resources or a plurality of nonconsecutive frequency resources in a given bandwidth (fifth aspect).

Further, the transmitting/receiving section 220 of the user equipment 20 on the transmission side (for example, UE #1 in Fig. 3A) may transmit a given signal (estimation signal) used for estimating at least one of the position of the user equipment 20 on the transmission side and the distance to the user equipment 20 by using a given resource (estimation signal resource). The transmitting/receiving section 220 may transmit the given signal without via the base station 10.

The control section 210 of the user equipment 20 on the transmission side may transmit the given signal by using a given sequence (second aspect). Further, the control section 210 may periodically or aperiodically transmit the given signal (first aspect). Further, the control section 210 may transmit the given signal with a transmission power smaller than that of at least one of another signal and another channel (third aspect).

Further, the transmitting/receiving section 220 of at least one of the user equipment 20 on the reception side and the user equipment 20 on the transmission side may receive the information regarding the given signal (the estimation signal information) from the base station 10 or another user equipment 20 (for example, a local manager). The transmitting/receiving section 220 may receive or transmit another signal/channel other than the given signal.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, wireless, or the like, for example) and using these plural apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be referred to as a transmitting unit, a transmitter, and the like. In any case, as described above, the implementation method is not particularly limited.

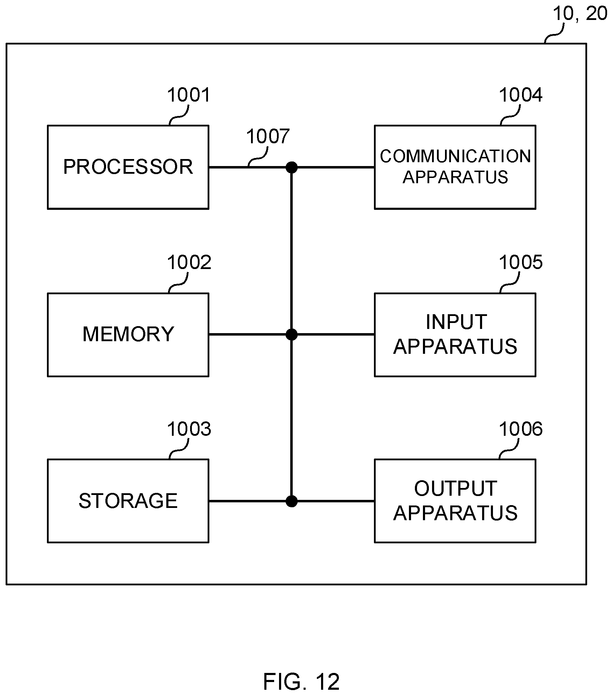

For example, the base station, the user equipment, and the like according to one embodiment of the present disclosure may function as a computer that executes the processing of the radio communication method of the present disclosure. Fig. 12 is a diagram illustrating an example of a hardware configuration of the base station and the user equipment according to one embodiment. Physically, the above-described base station 10 and user equipment 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user equipment 20 may be configured to include one or a plurality of apparatuses illustrated in the drawings, or may be configured without including some apparatuses.

For example, although only one processor 1001 is illustrated, a plurality of processors may be provided. Further, the processing may be executed by one processor, or the processing may be executed in sequence or using other different methods simultaneously by two or more processors. Note that the processor 1001 may be implemented with one or more chips.

Each of functions of the base station 10 and the user equipment 20 is implemented by causing given software (program) to be read on hardware such as the processor 1001 or the memory 1002, thereby causing the processor 1001 to perform operation, controlling communication via the communication apparatus 1004, and controlling at least one of reading and writing of data in the memory 1002 and the storage 1003.

The processor 1001 may control the whole computer by, for example, running an operating system. As the processor 1001, provided may be a central processing unit (CPU) including an interface with peripheral equipment, a control device, an operation device, a register, and the like. For example, at least a part of the above-described control section 110(210), transmitting/receiving section 120(220), and the like may be implemented by the processor 1001.

Furthermore, the processor 1001 reads programs (program codes), software modules, or data, from at least one of the storage 1003 and the communication apparatus 1004, into the memory 1002, and executes various processing according to these. As the program, a program to cause a computer to execute at least a part of the operation described in the above-described embodiment is used. For example, the control section 110(210) may be implemented by a control program that is stored in the memory 1002 and operates in the processor 1001, and another functional block may be implemented similarly.

The memory 1002 is a computer-readable recording medium, and may be constituted by, for example, at least one of a read only memory (ROM), an erasable programmable ROM (EPROM), an electrically EPROM (EEPROM), a random access memory (RAM) and/or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage apparatus.

The communication apparatus 1004 is hardware (transmitting/receiving device) for allowing inter-computer communication by using at least one of a wired network and a wireless network, and may be referred to as, for example, a network device, a network controller, a network card, a communication module, and the like. The communication apparatus 1004 may be constituted by a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating a transmitting section 120a (220a) and a receiving section 120b (220b) from each other.

The input apparatus 1005 is an input device for receiving input from the outside (for example, a keyboard, a mouse, a microphone, a switch, a button, a sensor, and the like). The output apparatus 1006 is an output device that performs output to the outside (e.g., a display, a speaker, a light emitting diode (LED) lamp, and the like). Note that the input apparatus 1005 and the output apparatus 1006 may be provided in an integrated configuration (for example, a touch panel).

Further, the apparatuses such as the processor 1001 and the memory 1002 are connected by the bus 1007 for communicating information. The bus 1007 may be configured with a single bus, or may be configured with different buses between apparatuses.

Further, the base station 10 and the user equipment 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be read interchangeably. Further, the signal may be a message. The reference signal can be abbreviated as an RS, and may be referred to as a pilot, a pilot signal and the like, depending on which standard applies. Furthermore, a component carrier (CC) may be referred to as a cell, a frequency carrier, a carrier frequency, and the like.

A radio frame may include one or a plurality of periods (frames) in a time domain. Each of the one or plurality of periods (frames) constituting the radio frame may be referred to as a "subframe". Furthermore, a subframe may include one or a plurality of slots in the time domain. A subframe may be a fixed time duration (for example, 1 ms) that is not dependent on numerology.

Here, numerology may be a communication parameter applied to at least one of transmission and reception of a certain signal or channel. Numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and a specific windowing processing performed by the transceiver in a time domain.

A slot may be constituted by one or a plurality of symbols in the time domain (orthogonal frequency division multiplexing (OFDM) symbols, single carrier frequency division multiple access (SC-FDMA) symbols, and the like). Further, the slot may be a time unit based on numerology.

A slot may include a plurality of mini slots. Each mini slot may include one or a plurality of symbols in the time domain. Further, the mini slot may be referred to as a subslot. Each mini slot may include fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as PDSCH (PUSCH) mapping type B.

A radio frame, a subframe, a slot, a mini slot and a symbol all represent the time unit in signal transmission. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (e.g., one to thirteen symbols), or may be a period longer than 1 ms. Note that the unit to represent the TTI may be referred to as a slot, a mini slot or the like, instead of a subframe.

Here, the TTI refers to, for example, the minimum time unit of scheduling in radio communication. For example, in the LTE system, a base station performs scheduling to allocate radio resources (a frequency bandwidth and transmission power that can be used in each user equipment and the like) to each user equipment in TTI units. Note that the definition of TTI is not limited thereto.

The TTI may be the transmission time unit of channel-encoded data packets (transport blocks), code blocks, codewords, or the like, or may be the unit of processing in scheduling, link adaptation, or the like. Note that, when the TTI is given, a time interval (for example, the number of symbols) to which the transport block, code block, codeword, or the like is actually mapped may be shorter than the TTI.

Note that, when one slot or one mini slot is referred to as a TTI, one or more TTIs (that is, one or more slots or one or more mini slots) may be the minimum time unit of scheduling. Further, the number of slots (the number of mini slots) constituting the minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that a long TTI (for example, a usual TTI, a subframe, or the like) may be replaced with a TTI having a time length exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined based on the numerology.

Further, the RB may include one or a plurality of symbols in the time domain, and may have a length of one slot, one mini slot, one subframe, or one TTI. One TTI, one subframe, and the like each may be constituted by one or a plurality of resource blocks.

Note that one or a plurality of RBs may be referred to as a physical resource block (PRB (Physical RB)), a subcarrier group (SCG (Sub-Carrier Group)), a resource element group (REG), a PRB pair, an RB pair, or the like.

Furthermore, a resource block may be constituted by one or a plurality of resource elements (REs). For example, one RE may be a radio resource area of one subcarrier and one symbol.

A bandwidth part (BWP) (which may be referred to as a partial bandwidth or the like) may represent a subset of consecutive common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include BWP for UL (UL BWP) and BWP for DL (DL BWP). For the UE, one or a plurality of BWPs may be configured within one carrier.

At least one of the configured BWPs may be active, and it may not be assumed that the UE transmits and receives a given signal/channel outside the active BWP. Note that a "cell", a "carrier", or the like in the present disclosure may be replaced with the "BWP".

Note that the structures of radio frames, subframes, slots, mini slots, symbols and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Further, the information, parameters, and the like described in the present disclosure may be represented using absolute values or relative values with respect to given values, or may be represented using other corresponding information. For example, a radio resource may be instructed by a given index.

The names used for parameters and the like in the present disclosure are in no respect limiting. Furthermore, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a variety of different technologies. For example, data, instructions, commands, information, signals, bits, symbols, chips, and the like all of which may be referenced throughout the above-described description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, a signal, and the like may be input/output via a plurality of network nodes.

The information, signals, and the like that are input and output may be stored in a specific location (for example, in a memory), or may be managed using a management table. The information, signal, and the like to be input and/or output can be overwritten, updated or appended. The output information, signal, and the like may be deleted. The information, signals, and the like that are input may be transmitted to another apparatus.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, and the like. Further, a notification of MAC signaling may be given using, for example, MAC control elements (MAC control elements (CEs)).

Further, a notification of given information (for example, notification of "being X") is not limited to explicit notification but may be performed implicitly (for example, by not performing notification of the given information or by performing notification of another piece of information).

Decisions may be made in values represented by one bit (0 or 1), may be made in Boolean values that represent true or false, or may be made by comparing numerical values (for example, comparison against a given value).

Regardless of whether software is referred to as software, firmware, middleware, microcode, or hardware description language, or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, software, instruction, information, and the like may be transmitted/received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. When a base station accommodates a plurality of cells, the entire coverage area of the base station can be partitioned into a plurality of smaller areas, and each smaller area can provide communication service through base station subsystems (e.g., indoor small base stations (remote radio heads (RRHs))). The term "cell" or "sector" refers to a part or the whole of a coverage area of at least one of a base station and a base station subsystem that perform a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmitting apparatus, a receiving apparatus, a radio communication apparatus, and the like. Note that at least one of the base station and the mobile station may be a device mounted on a moving object, a moving object itself, and the like. The moving object may be a transportation (for example, a car, an airplane and the like), an unmanned moving object (for example, a drone, an autonomous car, and the like), or a (manned or unmanned) robot. Note that at least one of the base station and the mobile station also includes a device that does not necessarily move during a communication operation. For example, at least one of the base station and the mobile station may be an Internet of Things (IoT) device such as a sensor.

Further, the base station in the present disclosure may be replaced with the user equipment. For example, each aspect/embodiment of the present disclosure may be applied to a configuration in which communication between the base station and the user equipment is replaced with communication among a plurality of pieces of user equipment (which may be referred to as, for example, device-to-device (D2D), vehicle-to-everything (V2X), and the like). In the case, the user equipment 20 may have the function of the above-mentioned base station 10. In addition, terms such as "uplink" and "downlink" may be replaced with terms corresponding to communication between terminals (for example, "side"). For example, the uplink channel, the downlink channel, and the like may be replaced with a side channel.

Similarly, the user equipment in the present disclosure may be replaced with a base station. In this case, the base station 10 may be configured to have the above-described functions of the user equipment 20.

In the present disclosure, the operation performed by the base station may be performed by an upper node thereof in some cases. In a network including one or a plurality of network nodes with base stations, it is clear that various operations performed for communication with a terminal can be performed by a base station, one or a plurality of network nodes (examples of which include but are not limited to mobility management entity (MME) and serving-gateway (S-GW)) other than the base station), or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined (for example, a combination of LTE or LTE-A and 5G) and applied.

The phrase "on the basis of" as used in the present disclosure does not mean "on the basis of only", unless otherwise specified. In other words, the phrase "based on" means both "based only on" and "based at least on".

Any reference to an element using designations such as "first" and "second" used in the present disclosure does not generally limit the amount or order of these elements. These designations may be used in the present disclosure only for convenience, as a method for distinguishing between two or more elements. Therefore, reference to the first and second elements does not mean that only two elements are adoptable, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, and the like.

Furthermore, "determining" may be regarded as "determining" of receiving (for example, receiving of information), transmitting (for example, transmitting of information), input, output, accessing (for example, accessing to data in a memory), and the like.

Further, "determining" may be regarded as "determining" of resolving, selecting, choosing, establishing, comparing, and the like. In other words, "determining" may be regarded as "determining" of a certain operation.

Further, "determining" may be replaced with "assuming", "expecting", "considering", and the like.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the phrase may mean that "A and B are different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided for the purpose of exemplification and explanation, and has no limitative meaning to the invention according to the present disclosure.

## Claims

1. User equipment comprising:
a receiving section configured to receive a given signal transmitted from another user equipment by using a given resource; and
a control section configured to estimate at least one of a position of the other user equipment and a distance to the other user equipment based on received power of the given signal in the given resource.

2. The user equipment according to claim 1, wherein the control section assumes that the given signal is transmitted with a transmission power smaller than a transmission power of at least one of another channel and another signal.

3. The first user equipment according to claim 1, wherein in a case where the received power is equal to or less than a given threshold value or less than the given threshold value, the control section estimates the distance based on the received power.

4. The user equipment according to any of claims 1 to 3, wherein the given resource includes one or more consecutive frequency resources or a plurality of nonconsecutive frequency resources in a given bandwidth.

5. The user equipment according to any of claims 1 to 4, wherein the given signal is generated using a given sequence and is transmitted periodically or aperiodically.

6. A radio communication method of user equipment, the method comprising:
a step of receiving a given signal transmitted from another user equipment by using a given resource; and
a step of estimating at least one of a position of the other user equipment and a distance to the other user equipment based on received power of the given signal in the given resource.
